# EUROPEAN PATENT SPECIFICATION

(11) **EP 0 681 785 B1**
(45) Date of publication and mention of the grant of the patent: **06.10.1999**
(21) Application number: 95201034.6
(22) Date of filing: 22.04.1995
(51) Int. Cl.: A21D 13/08

(54) **A snack filled with fruit pieces**
Mit Früchtenstücken gefülltes Snack-Produkt
Produit de snack garni de morceaux de fruit

(30) Priority: 13.05.1994 IT MI940965
(43) Date of publication of application: 15.11.1995
(73) Proprietor: BARILLA ALIMENTARE S.P.A., 43100 Parma (IT)
(72) Inventor: Buttini, Roberto, I-43100 Parma (IT); Bocelli, Franco, I-43100 Parma (IT); Guarneri, Roberto, I-43100 Parma (IT)
(74) Representative: Vannini, Torquato

(56) References cited:
- EP-A- 0 358 455
- EP-A- 0 384 238
- DE-A- 1 642 561
- GB-A- 691 435
- GB-A- 2 090 515
- GB-A- 2 186 475
- US-A- 3 057 736
- US-A- 4 350 711
- US-A- 4 948 602
- US-A- 5 190 776

## Description

The present invention relates, in its more general aspect, to a filled baked product which, in the description which follows and in the subsequent Claims, will be referred to as a filled snack, a term widely used for this type of baked product in the industry.

The invention relates more specifically to a snack which comprises a pastry exterior and a fruit inside (or filling), in which the fruit is in pieces, as well as to a method for the mass production of such a snack.

It is known that of all the filled snacks that make up this busy sector of the food industry, there is not one available today which can really claim that its filling is constituted by fruit pieces since the only "fruit" fillings used and usable until now are essentially constituted by jam with some (few) small pieces of fruit dispersed in it.

It is also known that this limitation, with which manufacturers are very unhappy, is almost totally due to technical and technological reasons involving equipment and the problems of filling and baking the snacks.

In addition, quite apart from the lack of fruit pieces in currently available jam-based fillings, such jam products necessarily have a high sugar content which is unwelcome from a dietary and nutritional point of view.

GB-A- 691435 relates to cereal products containing fruit and to a method for preparing the same.

EP-A- 0384238 decribes a method of preparing a long-life fruit based stuffing for pastry products.

There is therefore a need for a snack of the type described in which, from an organoleptic point of view, fruit pieces constitute the characterising component of the product, this being a snack which can be mass produced.

In order to satisfy this need, the present invention provides a snack comprising a pastry casing and a fruit filling, characterised in that the filling comprises, in percentages by weight of the weight of the snack:
- from 11 to 35% of fruit pieces, dehydrated to a moisture content of between 25 and 30% and having a water activity (Aw) value of between 0.75 and 0.85, and
- from 6 to 20% of fruit jam as the fluid component of the filling.

As to the type of fruit and jam which may be used for the filling of the snack of the invention, there is no limit in practice.

From an organoleptic point of view, particular advantages are provided by the use of fruit cocktails.

To advantage, the pastry casing of the snack of the invention has a consistency which is just sufficient to provide containment and support for its filling of fruit pieces, and an Aw value and moisture content isotonic with those of the filling, so as to prevent any pastry/fruit exchange of moisture either during the preparation of the snack or during the shelf-life of the product, which could damage the quality of the product.

According to a further characteristic of this invention, the pastry casing is constituted by a sheet of leavened dough commonly known as Danish pastry.

In addition the ratio of the weight of the Danish pastry casing to that of the filling of the snack of the invention is, to advantage, between 60/40 and 40/60.

The present invention provides a method for the production of a snack with a filling of pieces of fruit, characterised in that it includes the successive steps of:
- preparing a casing of uncooked dough;
- filling the casing with a first filling of fruit pieces having a moisture content of from 27 to 38% and an Aw of between 0.76 and 0.88; the fruit constituting from 11 to 35% by weight of the weight of the snack;
- proving and baking;
- cooling;
- adding a second filling comprising a quantity of fruit jam constituting from 6 to 20% by weight of the weight of the snack.

The fundamental teaching of the method of the present invention for producing snacks with a filling which includes fruit pieces is that filling is carried out in two separate steps:
- a first step (or pre-baking step) in which only the fruit pieces are put inside the dough before baking,
- a second step (or post-baking step) in which the fluid portion (fruit jam) of the filling is put into the baked, cooled product.

A second teaching is to use fruit pieces dehydrated to a predetermined moisture content and Aw value such as to enable them to undergo the various processes required by mass production without losing their organoleptic characteristics or nutritional value.

An additional teaching is to carry out the second, or post-baking, filling step with a jam (the fluid component of the filling) which has the dual task of:
- reviving the fruit which will have shrunk slightly during baking, that is, restoring it to its original appearance, consistency and chewability;
- filling the space left inside the snack by the "shrinking" of the fruit during its passage through the oven.

In accordance with one characteristic of the invention, the aforesaid first, pre-baking filling step is carried out by arranging a predetermined quantity of fruit pieces on a portion of a sheet of uncooked Danish pastry dough having dimensions corresponding to the snack which is to be produced and subsequently folding over the opposite sides of the portion so as to wrap the fruit arranged thereon.

During this step, the use of a "binding" fluid is very useful to hold the fruit pieces on the respective portion of the sheet of pastry dough, this binder being glucose syrup for example and for preference.

Before baking, the following steps are carried out:
- forming; that is folding the pastry strip over so as to enclose the fruit pieces and sealing the turnover obtained transversely, and
- proving under entirely conventional conditions of temperature and humidity for a conventional period of time.

The baking conditions are also entirely conventional.

Characteristics and advantages provided by the invention will become clearer from the description which follows of one example of the production of filled snacks according to the invention.

A plurality of continuous strips of uncooked Danish pastry dough are fed on an appropriate conveyor belt, advanced stepwise, to a first filling station. Each strip (average thickness around 4-5mm, width 13-14 cm) is already marked with two longitudinal fold lines which extend parallel to the edges of the strip and define borders having a width of about 2 cm.

A cocktail of pieces of fruit, already treated with a small, predetermined quantity of sugar syrup as a binding agent, arrives at the same station on a separate conveyor in an intermittent flow. The fruit pieces have been dehydrated earlier so as to have an average moisture content of 35% with an Aw value of 0.85.

At each advance of the strips of Danish pastry dough through the filling station, a predetermined measure of the cocktail of fruit pieces is deposited on the central part of each portion thereof. The measures (the same for all the strips of dough) may vary between 8 and 12g and are preferably 9-10 g when the overall weight of the finished snack is to be 36-38 g.

The measures of fruit may naturally vary within much broader limits than those given above by way of example, provided that the dimensions, consistency and weight of the strips of dough which will form the casing for the fruit are adjusted at the same time.

Downstream of the filling station, each strip of dough, with the respective measures of fruit arranged on it, passes through a forming station where the side borders are folded over the fruit pieces so as to cover them completely, thereby obtaining a tubular body of dough filled with successive, spaced measures of fruit pieces.

In this same forming station, each of these continuous tubular bodies is cut between each measure of fruit and the next to form portions of predetermined length.

As this operation is carried out on uncooked dough, it also simultaneously seals each portion transversely, providing a semifinished product which is closed around its periphery and is filled with fruit ready for proving and baking. In such a semifinished product, the dough/fruit ratio is 70/30, though this value may of course vary widely (50/50-80/20) according to the desired organoleptic characteristics of the finished snack.

Proving takes place in an environment where the temperature is around 30°C with a relative humidity of around 85% and the semifinished products remain there for around 8 hours. The risen semifinished products are baked at a temperature of around 180-210°C for 13-15 minutes.

On leaving the oven, the baked products are cooled to around 50°C and sent to a second filling station (post-baking filling) where they are injected with a predetermined measure, of around 6g, of fruit jam.

This is preferably an orange jam with pieces of apple.

Here again, the quantity of jam may vary within broad limits depending on the product to be made, bearing in mind that the jam has the dual task of reviving the fruit which has shrunk during baking and of completely filling the cavity inside the snack.

It is important to underline the great advantage provided by the present invention.

The total weight of the finished snack is 36-38g; the weight of the fruit pieces (with a moisture content of 30-35%) is 9-10g; that of the jam is around 6g.

Therefore the weight of the pastry in the finished snack is 22-25g.

Bearing in mind that 9-10g of fruit with a moisture content of 30-35% is equivalent to 45-50g of fresh fruit, it is clear that the present invention provides a fruit snack in which the fruit is equivalent to fresh fruit WEIGHING OVER TWICE AS MUCH AS THE PASTRY.

## Claims

1. A snack including a pastry casing and a fruit filling, characterised in that the filling comprises in percentages by weight of the weight of the snack:
- from 11 to 35% of fruit pieces, dehydrated to a moisture content of between 25 and 30% and having an Aw value of between 0.75 and 0.85, and
- from 6 to 20% of a fruit jam as the fluid component of the filling.

2. A snack according to Claim 1, characterised in that the pastry casing has a consistency just sufficient to provide containment and support for the filling and a moisture content and Aw value isotonic with those of the filling.

3. A snack according to Claim 2, characterised in that the pastry casing is constituted by Danish pastry.

4. A snack according to Claim 3, characterised in that the ratio of the weight of the pastry casing to that of the filling is between 60/40 and 40/60.

5. A snack according to Claim 1, characterised in that the fruit pieces are treated with glucose syrup or similar binding fluids.

6. A method for the mass production of fruit-filled snacks, characterised in that it includes the successive steps of:
- preparing a casing of uncooked dough,
- filling the dough casing with a first filling of fruit pieces having a moisture content of 27-38% and an Aw value of between 0.76 and 0.88, this fruit accounting for 11 to 35% of the weight of the snack,
- proving and baking,
- cooling,
- adding a second filling comprising a quantity of fruit jam constituting from 6 to 20% by weight of the weight of the snack, so as to revive the fruit pieces and fill the space left inside the pastry casing by shrinkage of the fruit pieces during the baking step.

7. A method for the mass production of filled snacks including a pastry casing and a fruit inside or filling, characterised in that it includes the successive steps of:
- laying out a plurality of strips of uncooked Danish pastry dough,
- depositing on each strip predetermined quantities of fruit pieces having a moisture content of 27-38% and an Aw value of between 0.78 and 0.88, this fruit accounting for between 11 and 35% of the weight of the snack,
- folding the side portions of the strips of uncooked Danish pastry dough over so as to cover each measure of fruit pieces completely, thereby obtaining corresponding semifinished products each constituted by a casing of uncooked Danish pastry dough closed at its periphery and enclosing a measure of fruit pieces,
- proving and baking the semifinished products, thereby obtaining snacks filled with fruit pieces,
- cooling the snacks,
- filling the snacks with predetermined quantities of a fruit jam in order to revive the fruit pieces and fill the space left inside the snacks by shrinkage of the fruit pieces during baking.

8. A method according to Claim 7, characterised in that before being deposited in measures on the strips of uncooked Danish pastry dough, the fruit pieces are mixed with glucose syrup or similar binding fluids.

## Patentansprüche

1. Snack mit einem Mantel aus Gebäck und einer Fruchtfüllung, **dadurch gekennzeichnet**, **daß** die Füllung folgende Anteile in Gewichtsprozent bezogen auf das Gewicht des Snacks enthält:
- von 1 bis 35 % Fruchtstücke, dehydriert auf eine Feuchte zwischen 25 und 30 % und mit einem Wasseraktivitätswert (Aw-Wert) zwischen 0,75 und 0,85, und
- von 6 bis 20 % Fruchtmarmelade als Flüssigkeitskomponente der Füllung.

2. Snack nach Anspruch 1, dadurch gekennzeichnet, daß der Mantel aus Gebäck eine Beschaffenheit hat, die gerade hinreicht, um die Füllung zu umschließen und zu tragen, sowie eine Feuchte und einen Aw-Wert, die isotonisch mit denjenigen der Füllung sind.

3. Snack nach Anspruch 2, dadurch gekennzeichnet, daß der Mantel aus Gebäck aus dänischem Gebäck besteht.

4. Snack nach Anspruch 3, dadurch gekennzeichnet, daß das Verhältnis zwischen dem Gewicht des Mantels aus Gebäck und dem der Füllung zwischen 60:40 und 40:60 liegt.

5. Snack nach Anspruch 1, dadurch gekennzeichnet, daß die Fruchtstücke mit Glukosesirup oder ähnlichen Bindeflüssigkeiten behandelt sind.

6. Verfahren für die Massenproduktion von fruchtgefüllten Snacks, **dadurch gekennzeichnet, daß** es die aufeinanderfolgenden Schritte umfaßt:
- Vorbereiten eines Mantels aus rohem Teig
- Füllen des Teigmantels mit einer ersten Füllung von Fruchtstücken, die eine Feuchte von 27 bis 38 % und einen Aw-Wert zwischen 0,76 und 0,88 haben, Wobei der Anteil dieser Früchte zwischen 11 und 35 Gewichts-% des Snacks beträgt,
- Aufgehenlassen und Backen
- Abkühlen
- Hinzufügen einer zweiten Füllung mit einer Menge an Fruchtmarmelade zwischen 6 und 20 Gewichts-% bezogen auf das Gewicht des Snacks, um die Fruchtstücke zu reaktivieren und den Raum aufzufüllen, der im Mantel aus Gebäck während des Backschrittes durch das Schrumpfen der Fruchtstücke entstanden ist.

7. Verfahren für die Massenproduktion von gefüllten Snacks mit einem Mantel aus Gebäck und einem Frucht-Inneren oder einer Füllung, **dadurch gekennzeichnet**, **daß** es die aufeinanderfolgenden Schritte umfaßt:
- Auslegen einer Vielzahl von Streifen aus rohem dänischen Gebäckteig,
- Belegen jedes Streifens mit vorbestimmten Mengen an Fruchtstücken, die eine Feuchte von 27 bis 38 % und einen Aw-Wert zwischen 0,78 und 0,88 haben, wobei der Anteil dieser Früchte zwischen 11 und 35 Gewichts-% des Snacks beträgt,
- Umfalten der Seitenabschnitte der Streifen des rohen dänischen Gebäckteigs, so daß jede bestimmte Menge an Fruchtstücken komplett abgedeckt wird, wodurch man entsprechende halbfertige Produkte erhält, die jeweils aus einem Mantel von rohem dänischen Gebäckteig bestehen, der am Rand geschlossen ist und eine bestimmte Menge an Fruchtstücken enthält,
- Aufgehenlassen und Backen der halbfertigen Produkte, wodurch man Snacks erhält, die mit Fruchtstücken gefüllt sind,
- Abkühlen der Snacks,
- Füllen der Snacks mit vorbestimmten Mengen einer Fruchtmarmelade, um die Fruchtstücke zu reaktivieren und den Raum innerhalb der Snacks aufzufüllen, der durch das Schrumpfen der Fruchtstücke während des Backens entstanden ist.

8. Verfahren nach Anspruch 7, dadurch gekennzeichnet, daß die Fruchtstücke mit Glukosesirup oder ähnlichen Bindeflüssigkeiten gemischt werden, bevor sie in bestimmten Mengen auf die Streifen aus rohem dänischen Gebäckteig gelegt werden.

## Revendications

1. Produit alimentaire comprenant une enveloppe de pâtisserie et un remplissage de fruit, caractérisé en ce que le remplissage comprend en pourcentage en masse par rapport à la masse du produit :
- de 11 à 35% de morceaux de fruit, déshydratés jusqu'à un contenu d'humidité compris entre 25 et 30% et ayant une valeur d'activité d'eau comprise entre 0,75 et 0,85, et
- de 6 à 20% d'une confiture de fruit comme composant fluide du remplissage.

2. Produit selon la revendication 1, caractérisé en ce que l'enveloppe de pâtisserie a une consistance juste suffisante pour fournir un contenant et un support pour le remplissage, et un contenu d'humidité et une valeur d'activité d'eau isotoniques avec ceux du remplissage.

3. Produit selon la revendication 2, caractérisé en ce que l'enveloppe de pâtisserie est constituée par de la pâtisserie danoise.

4. Produit selon la revendication 3, caractérisé en ce que le rapport massique de l'enveloppe de pâtisserie par rapport au remplissage est compris entre 60/40 et 40/60.

5. Produit selon la revendication 1, caractérisé en ce que les morceaux de fruit sont traités avec un sirop de glucose ou des fluides de liaison similaires.

6. Procédé pour la production en masse de produits alimentaires remplis de fruit, caractérisé en ce qu'il comprend les étapes successives consistant à :
- préparer une enveloppe de pâte crue,
- remplir l'enveloppe de pâte avec un premier remplissage de morceaux de fruit ayant un contenu d'humidité compris entre 27 et 38% et une valeur d'activité d'eau comprise entre 0,76 et 0,88, ce fruit représentant entre 11 à 35% de la masse du produit alimentaire,
- laisser lever et cuire,
- refroidir,
- ajouter un deuxième remplissage comprenant une quantité de confiture de fruit constituant de 6 à 20% en masse du produit alimentaire, de manière à raviver les morceaux de fruit et remplir l'espace libéré à l'intérieur de l'enveloppe de pâte par retrait des morceaux de fruits lors de l'étape de cuisson.

7. Procédé pour la production en masse de produits alimentaires garnis comprenant une enveloppe de pâte et un intérieur ou remplissage de fruit, caractérisé en ce qu'il comprend les étapes successives consistant à :
- déposer plusieurs bandes de pâte de pâtisserie danoise crue,
- déposer sur chaque bande des quantités prédéterminées de morceaux de fruit ayant un contenu d'humidité compris entre 27 et 38% et une valeur d'activité d'eau comprise entre 0,78 et 0,88, ce fruit représentant entre 11 et 35% en masse du produit alimentaire,
- plier les parties latérales des bandes de la pâte de pâtisserie danoise crue de manière à couvrir chaque mesure de morceaux de fruit complètement, de sorte à obtenir des produits semi-finis correspondants constitués chacun par une enveloppe de pâte de pâtisserie danoise crue fermée à sa périphérie et contenant une mesure de morceaux de fruit,
- laisser lever et cuire les produits semi-finis, de manière à obtenir des produits alimentaires remplis de morceaux de fruit,
- refroidir les produits alimentaires,
- remplir les produits alimentaires de quantités prédéterminées d'une confiture de fruit de manière à raviver les morceaux de fruit et à remplir l'espace libéré à l'intérieur des produits alimentaires par retrait des morceaux de fruit lors de la cuisson.

8. Procédé selon la revendication 7, caractérisé en ce que, avant d'être déposés en quantités mesurées sur les bandes de pâte de pâtisserie danoise crue, les morceaux de fruit sont mélangés avec du sirop de glucose ou des fluides de liaison similaires.
